# EUROPEAN PATENT APPLICATION

(11) **EP 4 319 444 A1**
(43) Date of publication of application: **07.02.2024**
(21) Application number: 21935056.8
(22) Date of filing: 02.04.2021
(51) Int. Cl.: H04W 74/08

(54) **USER EQUIPMENT, WIRELESS COMMUNICATION METHOD AND BASE STATION**

(71) Applicant: NTT DOCOMO, INC., Tokyo 100-6150 (JP)
(72) Inventor: OHARA, Tomoya, Tokyo 100-6150 (JP); OKAMURA, Masaya, Tokyo 100-6150 (JP); HARADA, Hiroki, Tokyo 100-6150 (JP); KURITA, Daisuke, Tokyo 100-6150 (JP); OKANO, Mayuko, Tokyo 100-6150 (JP)
(74) Representative: Hoffmann Eitle
(86) International application number: PCT/JP2021/014405
(87) International publication number: WO 2022/208896

(57) **Abstract**

A terminal according to an aspect of the present disclosure includes: a control section that controls one or more random access procedures; a receiving section that acquires, on the basis of the one or more random access procedures, a plurality of information related to a plurality of timing advances, each of the plurality of timing advances corresponding to a respective one of a plurality of base stations or
transmission/reception points; and a transmitting section that performs a UL transmission on the basis of at least one of the plurality of information related to the plurality of timing advances.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In an existing system (for example, Rel. 16 or earlier versions/5G or earlier generations), a timing of UL transmission is controlled based on a timing advance (TA). UEs perform timing control of UL transmission for each timing advance group (TAG) configured in advance. Thus, at the reception side (for example, base stations) of the UL, reception timings of UL signals transmitted from different UEs can be aligned.

For the future radio communication systems (for example, Rel. 17 or later versions/Beyond5G/6G or later generations), in order to achieve enhancement in communication quality/enhancement in reliability, establishing synchronization (for example, UL synchronization) with a plurality of base stations/transmission/reception points (TRPs) is conceivable. For the future radio communication systems, a situation is expected where many base stations are placed near a UE compared to an existing system, so that establishment of synchronization (for example, UL synchronization) with a plurality of base stations/TRPs may be required.

However, in an existing system, a study has not yet been sufficient on a control method for a case where a terminal establishes synchronization with a plurality of base stations/TRPs or a method of acquiring/controlling timing advances corresponding to the plurality of base stations/TRPs.

In view of this, the present disclosure has an object to provide a terminal, a radio communication method, and a base station that enable appropriate control of UL synchronization even when the terminal performs communications using a plurality of base stations/TRPs. Solution to Problem

A terminal according to an aspect of the present disclosure includes: a control section that controls one or more random access procedures; a receiving section that acquires, on the basis of the one or more random access procedures, a plurality of information related to a plurality of timing advances, each of the plurality of timing advances corresponding to a respective one of a plurality of base stations or transmission/reception points; and a transmitting section that performs a UL transmission on the basis of at least one of the plurality of information related to the plurality of timing advances.

### Advantageous Effects of Invention

According to an aspect of the present disclosure, even when a terminal performs communications using a plurality of base stations/TRPs, UL synchronization can be appropriately controlled.

### Brief Description of Drawings

[FIG. 1] FIG. 1 is a diagram to show an example of a case where a UE establishes UL synchronization with a plurality of base stations.
[FIG. 2] FIGS. 2A and 2B are each a diagram to show an example of a case where a UE acquires/stores a plurality of TA information.
[FIG. 3] FIGS. 3A and 3B are each a diagram to show an example of a case where a UE storing a plurality of TA information updates the TA information.
[FIG. 4] FIG. 4 is a diagram to show an example of a case where a UE storing a plurality of TA information performs a UL transmission by using the TA information.
[FIG. 5] FIGS. 5A and 5B are each a diagram to show an example of a case where a UE storing a plurality of TA information retransmits a UL transmission.
[FIG. 6] FIG. 6 is a diagram to show an example of a case where s UE storing s plurality of TA information performs UL transmissions by using a plurality of beams/ TA information.
[FIG. 7] FIG. 7 is a diagram to show an example of a schematic structure of a radio communication system according to one embodiment.
[FIG. 8] FIG. 8 is a diagram to show an example of a structure of a base station according to one embodiment.
[FIG. 9] FIG. 9 is a diagram to show an example of a structure of a user terminal according to one embodiment.
[FIG. 10] FIG. 10 is a diagram to show an example of a hardware structure of the base station and the user terminal according to one embodiment.

### Description of Embodiments

In an existing system (for example, NR in Rel. 16 or earlier versions), a terminal (hereinafter also referred to as UE) establishes UL synchronization with one base station, and thus needs to perform a procedure of establishing UL synchronization again when the terminal performs a UL communication with another base station. Note that establishment of UL synchronization may be storing/adjusting a timing advance (TA).

In an existing system, a transmission timing for a UL channel and/or UL signal (UL channel/signal) is adjusted in accordance with a timing advance (TA). Reception timings for UL channels/signals from different UEs are adjusted at the base station side.

For the future radio communication systems (for example, Rel. 17 or later versions/Beyond5G/6G or later generations), further enhancement in communication performance, enhancement in reliability (or ensuring redundancy), a wider variety of use cases, and the like are expected. In order to achieve such an object, it is conceivable that a UE, assuming communications with a plurality of base stations/TRPs (hereinafter simply referred to as base stations), establishes UL synchronization with the plurality of base stations.

For the future radio communication systems, introduction of a dynamic change in shape of a cell of a base station/introduction of a mobile base station and/or the like are expected, and also a situation is conceivable where a plurality of base stations are placed near a UE, instead of a situation where a cell covering a plane is deployed as in an existing system. In that case, the UE is expected to need to establish UL synchronization with the plurality of base stations.

However, a control method for a case where a terminal establishes synchronization with a plurality of base stations or for a case where the terminal acquires/adjusts timing advances corresponding to the plurality of base stations is a problem.

The inventors of the present invention focused on the case where a UE establishes synchronization with a plurality of base stations or the case where the UE acquires/adjusts timing advances corresponding to the plurality of base stations, and came up with the idea of a method for appropriately performing communications with one or more base stations.

Embodiments according to the present disclosure will be described in detail with reference to the drawings as follows. Aspects may each be employed individually, or may be employed in combination.

Note that in the present disclosure, "A/B" may mean "at least one of A and B."

In the present disclosure, a base station, an eNB, a gNB, a next generation radio base station, a TRP, an integrated access backhaul (IAB) node (IAB node), an apparatus/UE that communicates with/manages a UE, and the like may be interchangeably interpreted.

In the present disclosure, a timing advance (TA) may be the same as a TA in an existing system or may be information corresponding to a TA in an existing system.

In the present disclosure, an expression "base station" may refer to an interaction/transmission/reception with a given base station by using a given transmit/receive beam. In the present disclosure, interactions/transmissions/receptions with the same base station by using different transmit/receive beams may be interpreted as interactions with different base stations. For example, the present embodiment may be applied to a case where an interaction with a given base station by using a plurality of transmit/receive beams is considered to be one base station.

The present disclosure may be applied only to a case where UL synchronization (or TA) for a plurality of base stations is established in the same carrier (or frequency band), may be applied only to a case where UL synchronization (or TA) for a plurality of base stations is established in different carriers (or frequency bands), or may be applied to both of the cases.

In the present disclosure, a beam, a TCI, a TCI state, a DL TCI state, a UL TCI state, a unified TCI state, QCL, a QCL assumption, a spatial relation, spatial relation information, a spatial domain filter, a precoder, and the like may be interchangeably interpreted.

### (First Aspect)

In a first aspect, a UE stores a plurality of information related to TAs (or a plurality of information corresponding to the TAs) for a plurality of base stations/beams at the same time, and controls communications by using one or a plurality of the plurality of information related to the TAs. Note that a TA may be interpreted as a TA value.

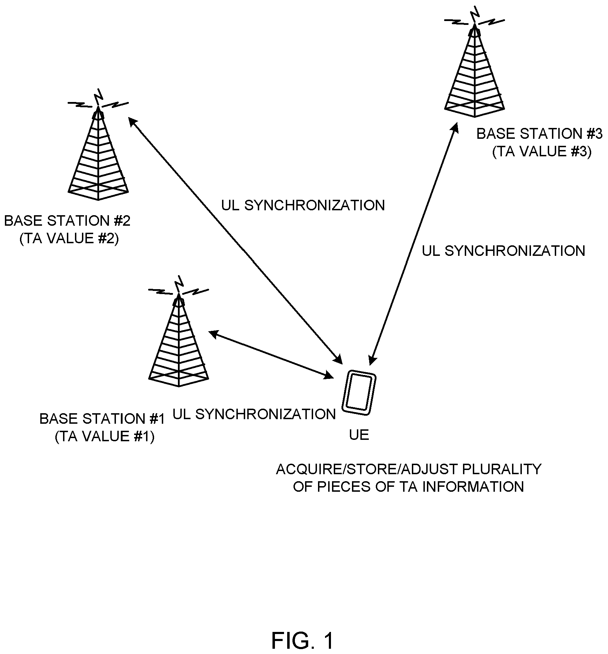

A UE may store a plurality of information (hereinafter also referred to as TA information) related to TAs for a plurality of base stations/beams at the same time to establish UL synchronization with the plurality of base stations (see FIG. 1). FIG. 1 shows a case where a UE establishes UL synchronization with base stations #1 to #3. The UE may acquire/store/adjust a plurality of TA information to control communications with the base stations (for example, UL transmissions to the base stations).

### <Acquisition of TA Information>

The UE may acquire one or a plurality of TA information (for example, each of the plurality of TA information corresponding to a respective one of one or a plurality of base stations) by using a given operation. The given operation may be a random access operation (random access procedure), for example. Note that the acquisition of the TA information is not limited to the random access procedure.

### [Option 1-1]

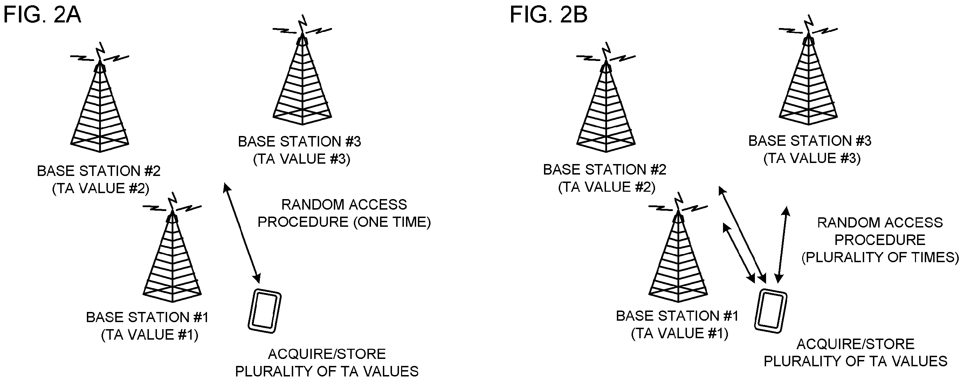

A plurality of TA information (for example, TA values) may be acquired through one time of random access procedure (see FIG. 2A). FIG. 2A shows a case where a UE acquires a plurality of TA values (for example, TA values #1 to #3) through one time of random access procedure. The plurality of TA values may correspond to respective different base stations. The random access procedure may be a PRACH transmission (message 1/message A) and a RAR reception (message 2/message B), for example.

As described above, the UE establishes UL synchronization with the plurality of base stations, allowing enhancement in communication quality, enhancement in reliability (ensuring redundancy), and the like. The UE establishes UL synchronization with the plurality of base stations, allowing the communications to be flexibly performed in various use cases (for example, a case where there is a dynamic change in shape/configuration of a cell of a base station or a base station moves (for example, a case of mobile base station)).

### <<Option 1-1-1>>

The TA values for the plurality of base stations may be calculated through transmission of one random access preamble (for example, PRACH), and notified to the UE. For example, the UE may transmit one PRACH, and each of the plurality of base stations may receive the one same PRACH transmitted from the UE. TA information (or TA value, TA command) may be included in a random access response (RAR or RAR MAC CE) corresponding to a response signal for the PRACH.

The UE may control transmission of the PRACH on the basis of a synchronization signal (or synchronization signal block, SS/PBCH block) transmitted from a given base station. In this case, the UE may notify/report to the base stations which base station has transmitted the synchronization signal that the transmission of the PRACH by the UE is based on. With a plurality of synchronization signals transmitted to the UE, the UE may notify/report to the base stations which synchronization signal the UE has transmitted the PRACH on the basis of.

The PRACH may be used for the notification/report to the base stations. For example, a condition/parameter (resource, occasion, sequence, or the like) used in the PRACH transmission may be associated with a base station/synchronization signal. In this case, the UE may perform the PRACH transmission by using a condition/parameter corresponding to the synchronization signal received.

### <<Option 1-1-2>>

The TA values for the base stations may be calculated through transmission of a plurality of PRACHs, and notified to the UE. For example, the UE may transmit a plurality of random access preambles, and each of the plurality of base stations may receive at least one of the plurality of PRACHs transmitted from the UE.

TA information (for example, TA value) may be notified to the UE from each of the base stations. Each of the base stations may notify the UE of the TA value by using a random access response (for example, RAR). For example, information related to the TA value may be included in an RAR MAC CE.

From the base stations having received the PRACHs, the UE may receive the TA information corresponding to each of the base stations. A base station having received a plurality of PRACHs may calculate a TA value on the basis of a given PRACH (for example, PRACH with the highest received power) and notify the UE of the TA information.

Alternatively, from any one base station of the base stations having received the PRACHs, the UE may receive, in addition to the TA information corresponding the one base station, information including TA information for another base station together. For example, the base stations having received the PRACHs may calculate TA values corresponding to the PRACHs received and notify a given base station of a plurality of TA information by using inter-base station communication (for example, X2 interface). The given base station may notify the UE of information including TA information corresponding to each of the plurality of base stations. This allows the UE to acquire TA information corresponding to a base station having no communication with the UE.

Note that, in Option 1-1-1/Option 1-1-2, in the random access procedure, a UE may be identified by transmission/reception of a random access preamble. For example, a correspondence relation between a preamble index/RACH occasion and information (for example, UE ID and/or the like) identifying a UE may be defined in a specification, or may be notified/configured for the UE by a base station. Alternatively, the information identifying the UE may be notified to the base station with a PUSCH and/or the like transmitted following a preamble.

Thus, when the base stations receive the plurality of PRACHs, from which UE each of the plurality of PRACHs is transmitted (for example, whether the plurality of PRACHs is transmitted from an identical UE) can be determined. As described above, a UE transmitting each of the PRACHs is recognized at the base station side, so that a plurality of TA information can be appropriately provided to the UE.

In Option 1-1-1/Option 1-1-2, the TA information may be notified to the UE in a message 4 (or message B in a two-step random access procedure) or a message/command later than the message 4. In other words, the notification of the TA information is not limited to the RAR. Thus, even if a base station fails to determine which UE the base station has received a PRACH from, the base station is sufficient to notify TA information in a message 4 or later (after determining the UE). This allows the TA information to be appropriately notified to the UE.

In Option 1-1-1/Option 1-1-2, when a plurality of base stations different from each other receive a preamble transmitted from an identical UE, the message 4 (or message B) or a message later than the message 4 (for example, message including TA information) may be transmitted from each of the base stations to the UE or may be transmitted from a given base station to the UE.

### [Option 1-2]

A plurality of TA values may be acquired through a plurality of random access procedures (see FIG. 2B). FIG. 2B shows a case where the UE acquires a plurality of TA values (for example, TA values #1 to #3) through a plurality of times of random access procedures. Each of the plurality of TA values may correspond to a respective one of different base stations. The UE may acquire a TA value (for example, TA value corresponding to a different base station) per random access procedure.

### <<Option 1-2-1>>

A plurality of random access procedures may be triggered at the same time. In this case, the UE may perform the plurality of random access procedures at the same time (or in parallel).

### <<Option 1-2-2>>

A plurality of random access procedures may be triggered individually (or independently). In this case, the UE may perform the plurality of random access procedures in parallel in the same period.

Alternatively, the UE may control the plurality of random access procedures not to be performed at the same time. For example, the UE may perform control so that an end (or expiration/cancellation) of a first random access procedure is followed by a second random access procedure performed (or triggered). In this case, when a new random access procedure is triggered and a TA value is acquired, a TA value acquired through a random access procedure performed before the new one may be stored.

### <Adjustment of TA Value>

A UE storing a plurality of TA information (for example, TA values) may adjust the TA values during a communication. A timing to adjust the TA values corresponding to a plurality of base stations may be at when the UE performs a communication (transmission/reception) with at least one of the plurality of base stations.

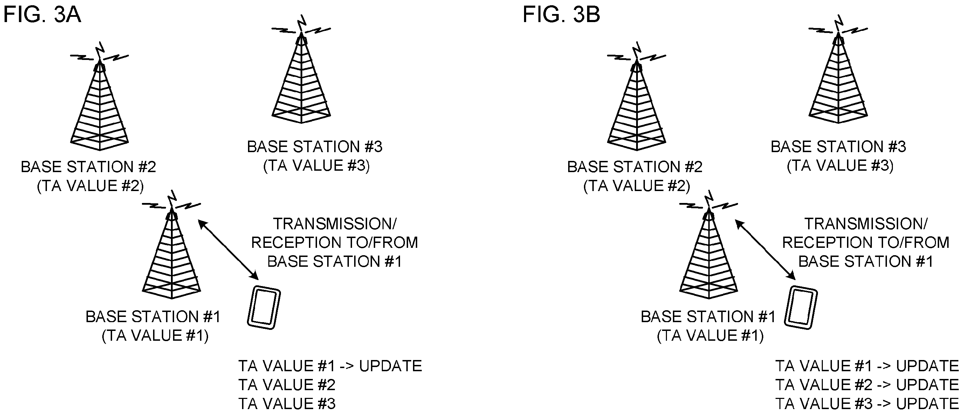

For example, when the UE performs transmission/reception to/from each base station of the plurality of base stations, the UE may perform control to adjust a TA value with the base station (see FIG. 3A). FIG. 3A shows a case where, when the UE performs a communication (transmission/reception) with a base station #1, the UE adjusts a TA value #1 corresponding to the base station #1. The adjustment of the TA value may be performed based on information (for example, TA command) notified from the base station. In the case shown in FIG. 3A, the UE is sufficient to perform the adjustment of the TA value limitedly to the base station to communicate with, so that an increase in processing burden for the UE can be suppressed.

Alternatively, when the UE performs transmission/reception to/from any one base station of the plurality of base stations, the UE may perform control to collectively adjust a plurality of TA values stored (or a part of the plurality of TA values) (see FIG. 3B). FIG. 3B shows a case where, when the UE performs a communication (transmission/reception) with a base station #1, the UE adjusts, in addition to a TA value #1 corresponding to the base station #1, a TA value #2 corresponding to a base station #2 and a TA value #3 corresponding to a base station #3.

The adjustment of each TA value may be performed based on adjustment information corresponding to the TA value. The adjustment information for each TA value may be notified from the base station to the UE or may be calculated in accordance with a given rule. In FIG. 3B, the UE can update the TA value corresponding to each base station highly frequently, allowing enhancement in accuracy of UL synchronization with each base station.

### (Second Aspect)

In a second aspect, UL transmission control will be described for a case where a UE stores a plurality of TA information.

### <UL Transmission based on TA Information>

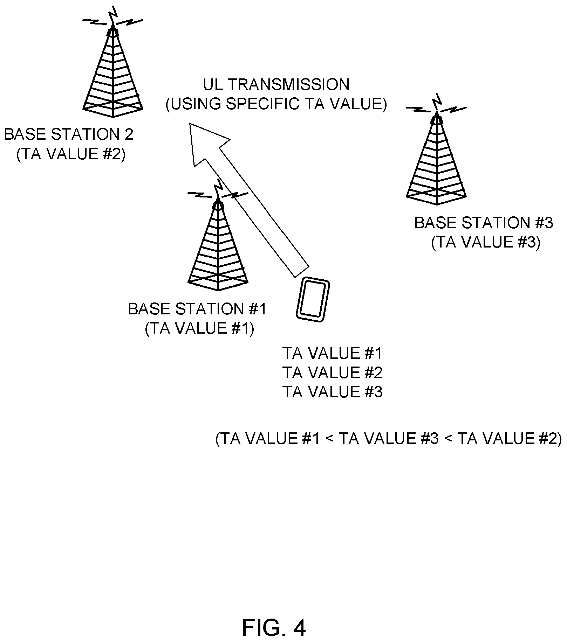

A UE may control a UL transmission on the basis of any one of TA information (for example, specific TA value) of a plurality of TA information (for example, TA values) (see FIG. 4). FIG. 4 shows an example of a case where a UE storing a plurality of TA values (here, TA values #1 to #3) performs a UL transmission by using a specific TA value. The UE may control the UL transmission on the basis of at least one of Options 2-1-1 to 2-1-4 as below.

### [Option 2-1-1]

The UE may control the UL transmission by using the smallest TA value. For example, in FIG. 4, the UE may control the UL transmission by using the TA value #1. Option 2-1-1 may be suitably applied to a case where the UL transmission transmitted from the UE is received by the nearest base station/cell (base station #1 in FIG. 4).

### [Option 2-1-2]

The UE may control the UL transmission by using the largest TA value. For example, in FIG. 4, the UE may control the UL transmission by using the TA value #2. Option 2-1-2 may be suitably applied to a case where the UL transmission transmitted from the UE is received by a plurality of base stations/cells (for example, base stations #1 and #2 in FIG. 4).

### [Option 2-1-3]

Which TA value to use may be indicated/configured for the UE by a base station. In other words, the UE is sufficient to perform a UL transmission by using a TA value indicated by the base station. Information related to the indication of the TA value from the base station may be included in DCI that schedules the UL transmission (for example, PUSCH). This allows each base station to specify, when scheduling a UL transmission to each base station, an appropriate TA value for the UE by using the DCI.

Alternatively, activation/deactivation of at least one of a plurality of TA values may be indicated. For example, activation/deactivation of TAs may be notified to the UE by using DCI/MAC CE. With the DCI/MAC CE, one TA value may be activated/deactivated, or the plurality of TA values may be activated/deactivated at the same time. When the plurality of TA values are activated, the UE may select which TA value to use among from the plurality of TA values, or may perform control to perform a plurality of UL transmissions by using the plurality of TA values.

### [Option 2-1-4]

The UE may determine a TA value to use for a UL transmission on the basis of a given condition/parameter. For example, the given condition/parameter may be at least one of the type of a DL reference signal received and a measurement result (for example, quality and the like) of the DL reference signal. Which condition to apply (for example, which condition to be based on, which TA to use) may be defined in a specification, or notified/configured for the UE by a base station.

### <Case of Failure in UL Transmission>

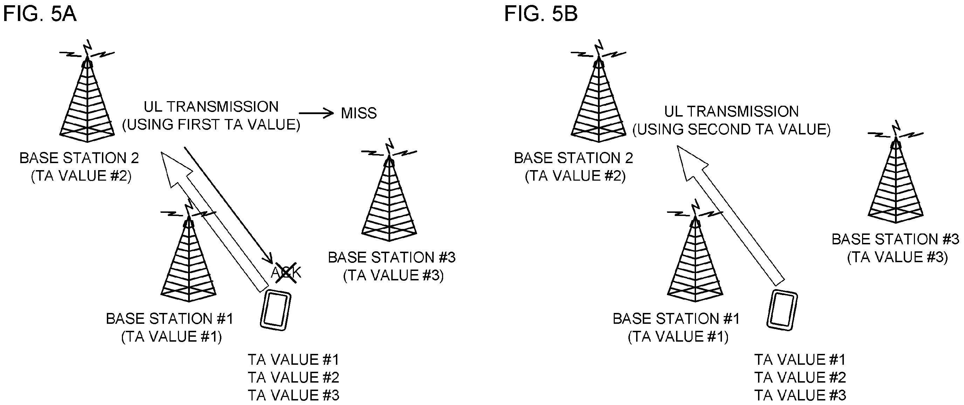

When a UE fails/misses in a UL transmission, the UE may perform the UL transmission (or UL retransmission) by using another TA value (see FIGS. 5A and 5B). FIG. 5A shows an example of a case where a UE storing a plurality of TA values (here, TA values #1 to #3) misses in transmitting a UL transmission using a given TA value (here, first TA value). FIG. 5B shows an example of a case where the UE having missed in transmitting the UL transmission using the first TA value performs the UL transmission (or UL retransmission) by using another TA value (here, second TA value).

The UE may determine the failure/miss of the UL transmission when the UE fails to receive an ACK for the UL transmission transmitted. Alternatively, the UE may determine the failure/miss of the UL transmission when the UE receives an NACK for the UL transmission transmitted.

The UE may control a UL transmission on the basis of at least one of Options 2-2-1 to 2-2-6 as below.

### [Option 2-2-1]

The UE may perform a UL transmission by using the next smallest TA value of the TA value (here, first TA value) used in the UL transmission failed in transmitting.

### [Option 2-2-2]

The UE may perform a UL transmission by using the next largest TA value of the TA value (here, first TA value) used in the UL transmission failed in transmitting.

### [Option 2-2-3]

The UE may perform a UL transmission by using a TA value having the largest difference from the TA value (here, first TA value) used in the UL transmission failed in transmitting.

### [Option 2-2-4]

With respect to beam information/transmission power information corresponding to the TA value (here, first TA value) used in the UL transmission missed in transmitting, by using a TA value having different beam information (for example, beam in different direction)/different transmission power information, the UE may perform a UL transmission. A correspondence relation between the TA value and the beam/transmission power information may be notified/configured for the UE by a base station.

### [Option 2-2-5]

Which TA value to use may be indicated/configured for the UE by a base station. In other words, the UE is sufficient to perform a UL transmission (or UL retransmission) by using a TA value indicated by the base station. Information related to the indication of the TA value (here, second TA value) from the base station may be included in DCI that indicates/schedules the UL retransmission. Alternatively, the information related to the indication of the TA value (here, second TA value) from the base station may be indicated, for the UE, with a notification of NACK.

### [Option 2-2-6]

The UE may determine a TA value to use in the UL transmission (or UL retransmission) on the basis of a given condition/parameter. For example, the given condition/parameter may be at least one of the type of a DL reference signal received and a measurement result (for example, quality and the like) of the DL reference signal. Which condition to apply (for example, which condition to be based on, which TA to use) may be defined in a specification, or notified/configured for the UE by a base station.

### <Plurality of UL Transmissions>

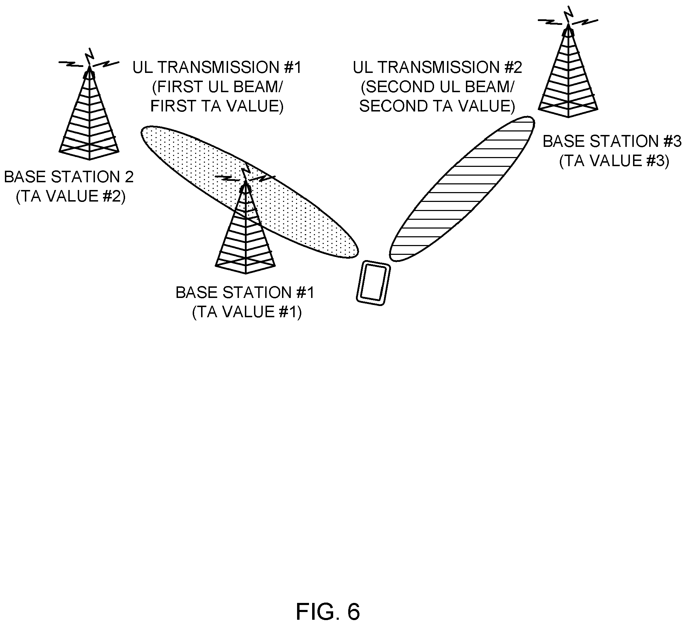

A UE, when performing a UL transmission, may perform a plurality of UL transmissions by using a plurality of TA information stored (for example, the UE may perform the plurality of UL transmissions each using a different TA value at the same time (or in a given time unit)). For each UL transmission, a different UL beam/different transmit power may be used (see FIG. 6).

In FIG. 6, a UE storing a plurality of TA values (here, TA values #1 to #3) may transmit UL transmissions using different TA values/different beams at the same time (or in a given time unit). The given time unit (or time interval) may be a unit of at least one of a slot, subslot, and given symbol. Here, a case is shown where a UL transmission #1 using a first UL beam/first TA value) and a UL transmission #2 using a second UL beam/second TA value are performed at the same time.

The plurality of UL transmissions may include the same information (for example, transport block/codebook). In this case, the plurality of UL transmissions may be transmitted with the same redundancy version (RV) applied. Alternatively, a different redundancy version may be applied to each of the plurality of UL transmissions for transmission. Note that each of the plurality of UL transmissions may include different information (for example, transport block/codebook).

The plurality of UL transmissions may be transmitted by using the same time and frequency resources (Case 2-1). Alternatively, the plurality of UL transmissions may be transmitted by using resources different in either time resource or frequency resource (Case 2-2). Alternatively, the plurality of UL transmissions may be transmitted by using resources different in both time resource and frequency resource (Case 2-3).

The UE capability may be defined as to whether the UE is capable of UL transmissions (or whether the UE supports UL transmissions) in Cases 2-1 to 2-3. As the UE capability information, the UE may report to a network (for example, base station) in advance about which Case the terminal itself supports.

For example, when a given base station schedules a UL transmission (for example, PUSCH) the UE may perform a plurality of UL transmissions by using any one of Cases 2-1 to 2-3. The transmission of each of the plurality of UL transmissions may be controlled on the basis of a different TA. Resources to be used for each UL transmission of the plurality of UL transmissions may be specified by DCI that schedules the UL transmission.

Alternatively, when a configured-grant-based UL transmission (for example, PUSCH) is configured, the UE may perform a plurality of UL transmissions by using any one of Cases 2-1 to 2-3. The transmission of each of the plurality of UL transmissions may be controlled on the basis of a different TA. Resources to be used for the plurality of UL transmissions may be specified by at least one of a higher layer parameter configuring the configured-grant-based PUSCH and DCI indicating activation of the configured-grant-based PUSCH.

### (Third Aspect)

In a third aspect, a case will be described where position measuring for a UE is performed by using a plurality of TA information (for example, TA values) stored in the UE. The plurality of TA information may be all of TA information stored in the UE or may be a part of the plurality of TA information stored in the UE.

The TA information corresponds to information corresponding to propagation times (or propagation distances) between base stations and a UE. Thus, a UE/base station can estimate the position of the UE on the basis of a plurality of the TA information corresponding to a plurality of base stations.

When a UE calculates/acquires information related to a result of position measuring for the UE, the UE may transmit/report to a base station the information related to the result of the position measuring. When a base station calculates/acquires information related to a result of position measuring for a given UE, the base station may notify the UE of the information related to the result of the position measuring.

A UE/base station may perform position measuring by taking account of, in addition to a plurality of TA information, at least one of information of radio wave intensity/quality (for example, RSRP/RSSI/RSRQ and the like) measured and transmission/reception angle information.

When position measuring is performed/calculated with a way different from TA information (or without using TA information), a TA value may be calculated by using a result of the position measuring. UL synchronization may be performed directly using a position measuring result even not calculated nor stored as a TA value. In other words, a correction of a timing to start a UL transmission may be performed directly by using the position measuring result.

A correspondence relation between a position measuring result and a TA value (or correction of UL synchronization timing) may be defined in a specification, or may be notified/configured for a UE by a base station through higher layer signaling or the like.

Based on a value of an assumed error caused by defining a TA value (or correction of UL synchronization timing) on the basis of position measuring, a frame configuration/physical channel configuration and the like may be defined/configured/switched. For example, a cyclic prefix (CP) length enough to cover the assumed error may be applied.

### (Fourth Aspect)

In a fourth aspect, a case will be described where a different TA is used for each of transmit/receive beams with base stations.

Each transmit/receive beam may be at least one of a UE transmit beam, a UE receive beam, a base station transmit beam, and a base station receive beam.

### <Option 4-1>

UL synchronization may be performed for each beam, and a TA may be stored. A UE may perform UL synchronization for each beam and store a TA corresponding to each beam.

A correspondence relation between each beam and UL synchronization (or TA) may be defined in a specification or may be notified/configured for a UE by a base station.

For each beam, a TA value acquired through a random access procedure and/or the like using the beam may be used. For example, in a given random access procedure, a UE may assume that a beam used for a beam/RAR reception used for a PRACH transmission corresponds to a TA value (for example, TA value received with the RAR) acquired in the random access procedure.

It may be defined/notified that a TA is switched as a beam is switched.

### <Option 4-2>

UL synchronization may be performed per a plurality of beams, and a TA may be store.

A correspondence relation between each beam and UL synchronization (or TA) may be defined in a specification, or may be notified/configured for a UE by a base station.

For each beam, a value acquired through a random access procedure and/or the like using the beam may be used as a TA value. A group using the same TA value may be defined/notified.

It may be defined/notified that a TA is switched as a beam is switched.

### <Option 4-3>

As a beam is switched, a TA to be used for a beam after the switching may be able to be notified.

For example, in a procedure of switching a beam, a base station may notify a UE of a TA to be used for a beam after the switching. The base station may notify the UE of a TA value. An index and/or the like may be assigned to the TA value acquired in advance, and in this (in the index numbered), the switching may be notified.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

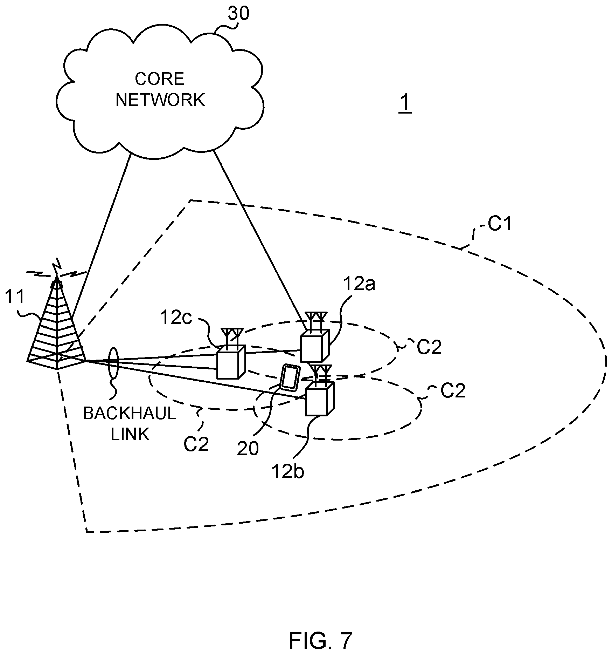

FIG. 7 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or a plurality of search spaces. The UE may monitor a CORESET associated with a given search space, based on search space configuration.

One search space may correspond to a PDCCH candidate corresponding to one or a plurality of aggregation levels. The one or the plurality of search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

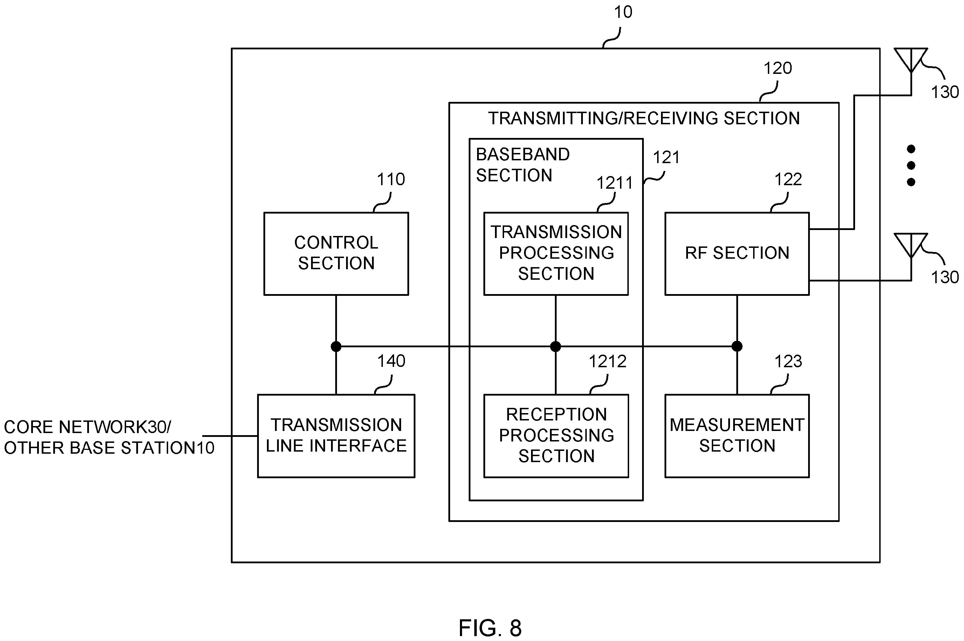

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data, control information, and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit, on the basis of a random access procedure, a plurality of information related to one or a plurality of timing advances. The transmitting/receiving section 120 may receive a UL transmission transmitted from a terminal on the basis of at least one of the plurality of information related to the plurality of timing advances.

The control section 110 may control one or more random access procedures performed with a given terminal.

### (User Terminal)

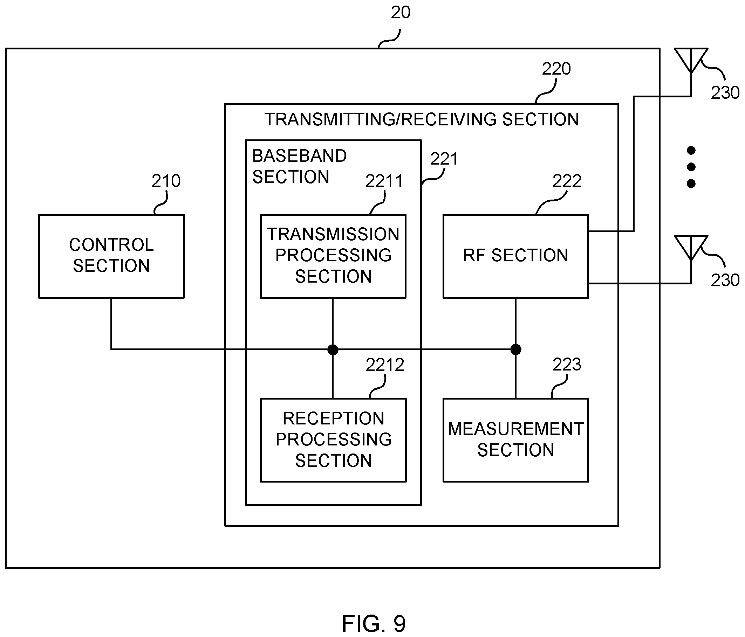

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211 and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, and digital-to-analog conversion, on the bit string to transmit, and may output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, on the signal of the radio frequency band received by the transmitting/receiving antennas 230, the transmitting/receiving section 220 (RF section 222) may perform amplification, filtering, demodulation to a baseband signal, and so on.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may acquire, on the basis of a random access procedure, a plurality of information related to a plurality of timing advances, each of the plurality of timing advances corresponding to a respective one of a plurality of base stations or transmission/reception points. The transmitting/receiving section 220 may perform a UL transmission on the basis of at least one of the plurality of information related to the plurality of timing advances. In a given time unit, the transmitting/receiving section 220 may perform a plurality of UL transmissions, each of the plurality of UL transmissions corresponding to a respective one of the plurality of information related to the plurality of timing advances.

The control section 210 may control one or more random access procedures. For example, based on the one or more random access procedures, the control section 210 may perform control to acquire/store the plurality of information related to the plurality of timing advances, each of the plurality of timing advances corresponding to a respective one of the plurality of base stations or transmission/reception points. The control section 210 may control a UL transmission on the basis of at least one of the stored plurality of information related to the plurality of timing advances.

When the control section 210 performs transmission or reception to or from at least one of the plurality of base stations or transmission/reception points, the control section 210 may perform control to adjust a value of at least one of the plurality of timing advances.

In a given time unit, the control section 210 may perform control to perform a plurality of UL transmissions, each of the plurality of UL transmissions corresponding to a respective one of the plurality of information related to the plurality of timing advances.

The control section 210 may determine position measuring by using at least two or more of the plurality of information related to the plurality of timing advances.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

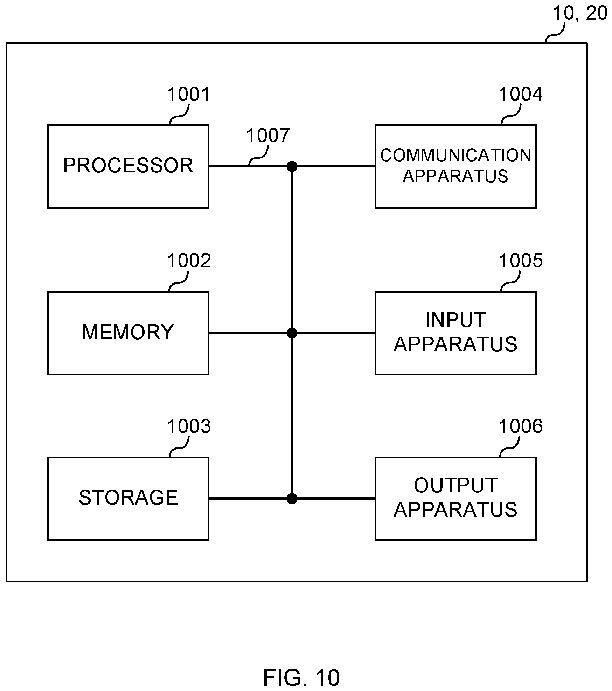

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or a plurality of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given channel/signal outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of given information (for example, notification of "being X") does not necessarily have to be notified explicitly, and can be notified implicitly (by, for example, not notifying this given information or notifying another information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a control section that controls one or more random access procedures;
a receiving section that acquires, on the basis of the one or more random access procedures, a plurality of information related to a plurality of timing advances, each of the plurality of timing advances corresponding to a respective one of a plurality of base stations or transmission/reception points; and
a transmitting section that performs a UL transmission on the basis of at least one of the plurality of information related to the plurality of timing advances.

2. The terminal according to claim 1, wherein
when the control section performs transmission or reception to or from at least one of the plurality of base stations or transmission/reception points, the control section performs control to adjust a value of at least one of the plurality of timing advances.

3. The terminal according to claim 1 or 2, wherein
in a given time unit, the transmitting section performs a plurality of UL transmissions, each of the plurality of UL transmissions corresponding to a respective one of the plurality of information related to the plurality of timing advances.

4. The terminal according to any one of claims 1 to 3, wherein
the control section determines position measuring by using at least two or more of the plurality of information related to the plurality of timing advances.

5. A radio communication method in a terminal, the radio communication method comprising:
controlling one or more random access procedures;
acquiring, on the basis of the one or more random access procedures, a plurality of information related to a plurality of timing advances, each of the plurality of timing advances corresponding to a respective one of a plurality of base stations or transmission/reception points; and
performing a UL transmission on the basis of at least one of the plurality of information related to the plurality of timing advances.

6. A base station comprising:
a control section that controls one or more random access procedures;
a transmitting section that transmits, on the basis of the one or more random access procedures, a plurality of information related to a plurality of timing advances; and
a receiving section that receives a UL transmission transmitted from a terminal on the basis of at least one of the plurality of information related to the plurality of timing advances.
